# EUROPEAN PATENT APPLICATION

(11) **EP 2 793 474 A1**
(43) Date of publication of application: **22.10.2014**
(21) Application number: 13164312.4
(22) Date of filing: 18.04.2013
(51) Int. Cl.: H04N 21/214, H04H 20/63, H04H 40/90, H04N 21/4402, H04N 21/61, H04N 1/327, H04N 5/65, H04N 7/10, H04N 7/20

(54) **Cascadable multiple dwelling satellite signal distribution device**

(71) Applicant: Unitron NV, 8970 Poperinge (BE)
(72) Inventor: Debusschere, Floris, 8872 Krombeke (BE); Gheeraert, Stephane, 7780 Comines-Wameton (BE); Pardubicky, Vojtech, 28504 Nepomerice (CZ)
(74) Representative: Plas, Axel Ivo Michel

(57) **Abstract**

According to the invention the cascadable multiple dwelling satellite signal distribution device (1) comprises at least one power supply module (170, 270), being connected to the respective convertor modules (100, 200) and at least one of the corresponding output connectors (160, 260),
said at least one power supply module (170, 2070) being configured to:
- receive power from at least one of the respective output connectors (160, 260); and
- provide this received power to its plurality of convertor modules (100, 200)..

## Description

### Field of the Invention

The present invention generally relates to the field of satellite signal distribution systems for multiple dwelling units. More particularly a cascadable multiple dwelling satellite signal distribution device for example for distributing satellite TV signals.

### Background of the Invention

In contrast to Single Family Units (SFU) that are able to handle distribution for an individual user in a single housing environment, Multiple dwelling units (MDU), often also referred to as multi-dwelling units, are systems where the satellite IF-band, generally provided by a head-end device connected to an LNB of a satellite dish, and optionally terrestrial cable are distributed over different apartments or flats or the like.

It is known from for example EP2224741A1, to handle this distribution by means of a distribution device comprising a multiswitch, by the use of taps, such as for example described in EP1347644A2, or any other distributing devices known to the person skilled in the art. In the case of distribution devices comprising a multiswitch, it means that the signals coming from the head end (mostly on the roof) will be distributed over the whole building by cascading a plurality of distribution devices comprising a multiswitch. Generally, these distribution devices will be installed in a vertical technical shaft of a building that spans a plurality of horizontal floors of the building. At each floor, connectors will be provided for customer devices to provide signals to the end-users. This is shown in figure 1 of EP2224741A1. Different types of distribution devices are available comprising multiswitches with connectors for 1 terrestrial input combined with 2, 4, 8, 12 or 16 satellite IF inputs and different amounts of output connectors, ranging typically from 4 to 24 connectors for customer devices. Unitron, for example, provides such distribution devices comprising multiswitches under the brand Johansson, referenced as 9940 to 9989. As known from EP2224741A1 such distributing devices comprising a multiswitch are often cascadable distributing devices, which means that one or more of the satellite signal received on the one or input connectors is bypassed to one or more output connectors and relayed to a subsequent distributing device. This means that in the configuration for a building mentioned above, where the plurality of distributing devices is mounted at each floor in a vertical technical shaft of the building, the cascadable distribution devices bypass the vertical lines for feeding them to the subsequent distribution device and tap off, by means of the multiswitch, a small amount of energy for the signal to the customer device.

As used herein, by "vertical lines" is not intended that the lines necessarily extend in vertical direction. This is just the term which is used in the art since the lines for transporting signals usually extend from a head end on the roof up to for example a plurality of distribution devices comprising a multiswitch for the flats on the different floors.

As used herein, by "horizontal lines" is not intended that the lines necessarily extend in horizontal direction. This is just the term which is used in the art for the lines which are branched off from the vertical lines to for example connect one or more customer devices on a particular floor of a building to a distribution device.

In such known distribution devices for a multiple dwelling satellite signal distribution system it is desired that each of the customer receiver devices, for example suitable Set Top Boxes for receiving satellite tv provides power to the components of the distribution device it makes use of. In this way the customers individually guarantee the power supply for their own needs, generally by providing a suitable DC voltage on the coaxial cable connecting the distribution device with the customer receiving device. This also enables an efficient installation of the distribution devices as there is no need to provide a power supply and corresponding power socket for each of the distribution devices.

A Single Family Unit distribution device that converts satellite signals to Internet Protocol signals, also referred to as IP signals, is for example known from US2012/0297426. The IP are the further distributed by means of distribution systems that make use of Ethernet cable, Wi-Fi, .... Furthermore a standard protocol for such satellite based IP signals was developed by SES Astra, BSkyB and some other partners under the name "Sat>IP", see for example http://www.ses.com/satip. In contrast to the abovementioned distribution devices these devices are able to handle communication with Internet Protocol enabled receiver devices by means of a wired or wireless communication link. However the number of customer receiver devices that can be handled by such a Single Family Unit is in practice limited, for example to a maximum of eight and thus does not allow for the required scalability in a multiple dwelling context. Furthermore, even when in a multiple dwelling context, the use of a plurality of Single Familiy Units would be considered, each such Single Family Units must be provided with power from a separate power supply, thus increased installation complexity as for each of these Single Family Units a power supply and power socket must be provided. This leads to an installation that is not efficiently manageable, where problems are hard to solve and where each household can affect the TV-signal of neighbouring households.

It is an aim of the invention to overcome the abovementioned problems and to provide a cascadable multiple dwelling satellite signal distribution device that is able to efficiently provide an Internet Protocol based communication with receiver devices of different customers and is sufficiently scalable to handle a multiple dwelling context.

### Summary of the Invention

According to a first aspect of the invention there is provided a cascadable multiple dwelling satellite signal distribution device, comprising:
- at least one input connector configured to receive an input satellite signal comprising one or more satellite signal frequency bands from an input cable;
- at least one corresponding cascade output connector being connected to a respective input connector and configured to output a cascade output satellite signal comprising the input satellite signal to a cascade output cable;
- a plurality of convertor modules, each being connected to the at least one input connector and configured to demodulate and convert a part or all of the one or more satellite signal frequency bands to an Internet Protocol based output signal; and
- a plurality of output connectors, each being connected to a corresponding convertor module for receiving the Internet Protocol based output signal and configured to output this Internet Protocol based output signal,
CHARACTERISED IN THAT
the cascadable multiple dwelling satellite signal distribution device further comprises at least one power supply module, being connected to the respective convertor modules and at least one of the corresponding output connector,
said at least one power supply module being configured to:
- receive power from at least one of the respective output connectors;
- provide this received power to its plurality of convertor modules.

In this way a scalable solution allowing for an efficient installation in a multiple dwelling building is provided.
According to a preferred embodiment the cascadable multiple dwelling satellite signal distribution device comprises a plurality of power supply modules, each being connected to one of the respective convertor modules and the corresponding output connector,

This allows each customer to independently provide the required power for the part of the distribution device assigned to its receiving devices.

According to a preferred embodiment:
- The at least one input connector is configured to connect to an input cable that is a coaxial cable suitable for transporting the one or more satellite signal frequency bands;
- The at least one corresponding cascade output connector is configured to connect to a cascade output cable that is a coaxial cable suitable for transporting the one or more satellite signal frequency bands; and
- The plurality of output connectors are configured to connect to output cables that are Ethernet cables suitable for concurrently transporting the Internet Protocol based output signal and power.

Preferably the plurality of output connectors are configured to connect to output cables that are Ethernet cables suitable for concurrently transporting power and the Internet Protocol based output signal in accordance with the Power Over Ethernet standard.

This allows for a solution where power exchange and data transmission between the receiving device and the distribution device can be implemented with a single cable.

According to still a further embodiment the convertor module: comprises:
- a multi-switch unit configured to selectively connect to one of the at least one input connectors and output at least one demodulated digital signal based on a part or all of the one or more satellite signal frequency bands;
- a conversion controller unit connected to the multi-switch and configured to convert the at least one demodulated digital signal to a digital Internet Protocol based output signal
- a physical layer unit connected to the conversion controller unit and configured to convert the digital Internet Protocol based output signal to the Internet Protocol based signal in function of a predetermined Physical OSI layer.

This allows for a simple implementation of the convertor module making use of existing high performance sub-units that reduce signal degradation.

Optionally the predetermined Physical OSI layer is based on the Ethernet standard.

Preferably the predetermined Physical OSI layer is further based on the Power Over Ethernet standard.

According to still a further embodiment the cascadable multiple dwelling satellite signal distribution device further comprises:
- at least one further input connector configured to receive an input terrestrial signal comprising one or more terrestrial signal frequency bands from an input cable;
- at least one further corresponding cascade output connector being connected to a respective further input connector and configured to output a cascade output satellite signal comprising the input terrestrial signal to a cascade output cable; and
- the plurality of convertor modules, each being further connected to the at least one further input connector and further configured to demodulate and convert a part or all of the one or more terrestrial signal frequency bands to the Internet Protocol based output signal.

According to an embodiment the cascadable multiple dwelling satellite signal distribution device further comprises:
- a plurality of the input connectors; and
- a plurality of corresponding cascade output connectors.

According to a second aspect of the invention, there is provided a multiple dwelling satellite signal distribution system comprising a plurality of cascadable multiple dwelling satellite signal distribution device according to the first aspect of the invention, **characterised in that** it comprises:
- a first cascadable multiple dwelling satellite signal distribution device;
- at least one of the output connectors of the first cascadable multiple dwelling satellite signal distribution device being configured to receive power and provide this received power to its plurality of convertor modules;
- a second cascadable multiple dwelling satellite signal distribution device of which the at least one input connector is connected to a respective cascade output connector of the first cascadable multiple dwelling satellite signal distribution device;
- at least one of the respective output connectors of the second cascadable multiple dwelling satellite signal distribution device being configured to receive power and provide this received power to its plurality of convertor modules.

### Brief Description of the Drawings

Fig. 1 illustrates a multiple dwelling satellite signal distribution system according to the invention;

Fig. 2 illustrates a cascadable multiple dwelling satellite signal distribution device of Figure in more detail.

### Detailed Description of Embodiment(s)

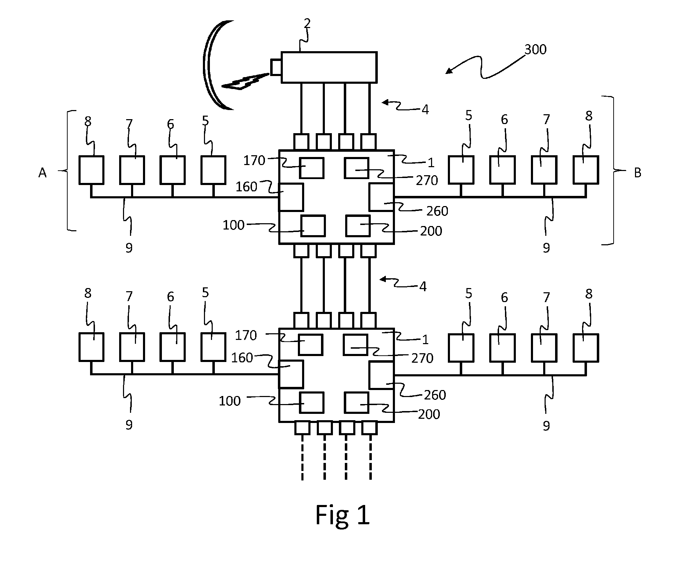

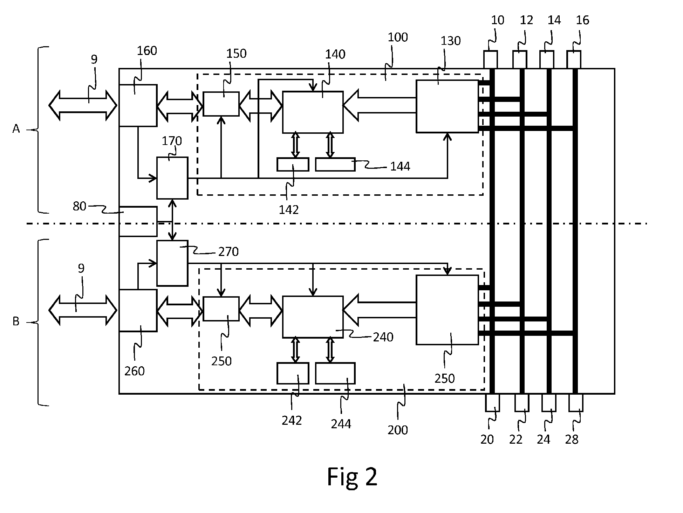

Figure 1 shows an embodiment of a multiple dwelling satellite signal distribution system 300 according to the invention for receiving satellite television signals. It schematically shows a satellite dish, for example mounted on the roof of a multiple dwelling building such as an apartment building comprising multiple floors, where each floor comprises multiple apartments. The Satellite dish concentrates the received satellite signals to a Low Noise Block converter 2, also referred to as LNB. The LNB 3 downconverts the high frequency signals to one or more Intermediate Frequency signals that are relayed to a plurality of cascadable multiple dwelling satellite signal distribution devices 1 by means of vertical lines 4, for example suitable coaxial cables. As shown in the embodiment of Figure 1 a first cascadable multiple dwelling satellite signal distribution device 1 receives four such Intermediate Frequency satellite signal bands, each through a separate coaxial input cable, connected to four input connectors 10, 12, 14, 16. As will be explained in further detail with reference to Figure 2, the multiple dwelling satellite signal distribution devices 1 each comprise four corresponding cascade output connectors 20, 22, 24, 26. These four cascade output connectors 20, 22, 24, 26 are respectively connected to the four input connectors 10, 12, 14,16. In this way they are able to relay the Intermediate Frequency satellite signal bands received at the input connectors 10, 12, 14, 16 for use by a further cascadable multiple dwelling satellite signal distribution device 1. This thus means that, the cascade output satellite signal provided at the four cascade output connectors 20, 22, 24, 26, comprises the input satellite signal that was received at the input connectors 10, 12, 14, 16. As shown in Figure 1 the cascade output connectors 20, 22, 24, 26 of the first cascadable multiple dwelling satellite signal distribution device are connected to four cascade output cables that subsequently serve as input cables for the input connectors 10, 12, 14, 16 of a second cascadable multiple dwelling satellite signal distribution device 1, for example arranged on another floor of the building. These vertical lines 4, for example suitable coaxial cables, thus allow for cascading a any desired plurality of such cascadable multiple dwelling satellite signal distribution devices 1.

Figure 1 further shows that each of the cascadable multiple dwelling satellite signal distribution devices 1 comprises two convertor modules 100, 200. These convertor modules 100, 200 are each connected to the four input connectors 10, 12, 14, 16 and are able to demodulate and convert a part or all of Intermediate Frequency satellite signal bands to an Internet Protocol based output signal as will be explained in more detail with reference to Figure 2. The two convertor modules 100, 200 are each connected to two output connectors 160, 260. The two output connectors 160, 260 in this way receive the Internet Protocol based output signal from their corresponding convertor module 100, 200. When one or more receiving devices, such as for example an Internet Protocoal enebled Set Top Box 8 and/or an Internet Protocol enabled TV 6 and/or an Internet Protocol enabled personal computer 7 and/or a Internet Protocol enabled wireless link for a Tablet computer 6, ... are connected by means of a horizontal line 9 in the form of a suitable output cable, such as for example an Ethernet cable, the Internet Protocol based output signal will be provided to these receiving devices 5, 6, 7, 8. It is clear from Fig 1 that each customer is able to connect, for example up to eight, of their receiving devices to a respective output connector of the multiple dwelling satellite signal distribution devices 1. For example receiving devices 5, 6, 7, 8 of a first customer of an apartment on a first floor to the first output connector 160 of the first cascadable multiple dwelling satellite signal distribution device 1, receiving devices 5, 6, 7, 8 of a second customer of an apartment on this first floor to the second output connector 260 of the first cascadable multiple dwelling satellite signal distribution device 1, receiving devices 5, 6, 7, 8 of a third customer of an apartment on another floor to the first output connector 160 of the second cascadable multiple dwelling satellite signal distribution device 1, receiving devices 5, 6, 7, 8 of a second customer of an apartment on this other floor to the second output connector 260 of the second cascadable multiple dwelling satellite signal distribution device 1. It is clear that alternative embodiments are possible of the cascadable multiple dwelling satellite signal distribution devices 1, comprising a different plurality of output connectors 160, 260, such as for example three, four, five or more.

Each of the receiver devices 5, 6, 7, 8 of the respective customers provides power to its respective convertor module 100, 200 of its cascadable multiple dwelling satellite signal distribution device 1. The power is provided from the customer receiver device 5, 6, 7, 8 to the output connector 160, 260 by means of the horizontal line 9. Each output connector 160, 260 relays this received power to a corresponding power supply module 170, 270. As shown each of these power supply modules 170, 270 convert the power to the desired level and supply it to their respective convertor module 100, 200. It is clear that the power could alternatively be provided by an intermediate device between the customer receiver device 5, 6, 7, 8, and the output connector 160, 260, such as for example an Internet Protocol based networking devices, such as for example a suitable network switch such as an Ethernet switch or a Wireless access point, such as a WiFi Router, etc.

Figure 2 schematically show an embodiment of the cascadable multiple dwelling satellite signal distribution devices 1 shown in Figure 1 in more detail. As explain above the four input connectors 10, 12, 14,16 each receive an input satellite signal comprising one or more satellite signal intermediate frequency bands from an input cable. It is clear that alternative embodiments are possible in which another number of input connectors are provided, such as for example one, two, three, four, or more. Each of the input cables could provide an input signal comprising one intermediate frequency band of a satellite signal, however a plurality of such frequency bands provided on a single input cable is also possible. As further shown in Figure 2, the four corresponding cascade output connectors 20, 22, 24, 26 are directly connected to their respective input connector 10, 12, 14,16. In this way they are able to cascade the input signal to the input connectors 10, 12, 14, 16 of a subsequent cascadable multiple dwelling satellite signal distribution device 1 by means of the vertical lines 4. In general, there could be suitable elements provided in the path between an input connector and a corresponding cascade output connector, such as for example suitable amplifiers or noise suppression filter to counteract signal degradation, however the output satellite signal provided at the cascade output connector should still comprise the input satellite signal, possibly in a somewhat modified form, for providing it to a cascade output cable.

There are provided two convertor modules 100, 200. The convertor module 100 is assigned to receiver devices of customer A and the convertor module 200 to receiver devices of customer B. Each of the convertor modules 100, 200 is connected to the four input connectors 10, 12, 14, 16. The convertor modules 100, 200 demodulate and convert a part or all of the one or more satellite signal frequency bands from the input connectors 10, 12, 14, 16 to an Internet Protocol based output signal that is provided to the respective output connectors 160, 260. As explained above with reference to Figure one these output connectors 160, 260 output the Internet Protocol based output signal to an output cable 9 or horizontal line 9 when connected to a receiving device 5, 6, 7, 8 of the respective customer.

This horizontal line 9 or output cable 9, receives power from a connected receiving device 5, 6, 7, 8 and provides this received power via its respective output connector 160, 260 to the corresponding power supply module 170, 270. The receiving devices 5 , 6, 7, 8 of customer A will thus supply the necessary power for power supply module 170 and the receiving devices 5 , 6, 7, 8 of customer B for power supply module 270. The output connectors 160, 260 are preferably suitable 8P8C connector, commonly referred to as an RJ45 connector for receiving a suitable mating connector mounted on an Ethernet output cable 9. Such Ethernet connectors and Ethernet cables 9 are generally known and are provide suitable for transporting the Internet Protocol based output signal. Preferably the output connectors 160, 260 are able to connect to output cables 9 that are Ethernet cables suitable for transporting power from a connected receiving device 5, 6, 7, 8 in accordance with the Power Over Ethernet standard. In such systems, for example in 10BASE-T or 100BASE-T systems, the output cable comprises uses specific pairs of wire that are not used for data transmission for power exchange. Alternatively, for example in 1000BASE-T systems, all pairs of wires are used for power exchange and superposed data transmission. Corresponding contact points and/or means for decoupling the data signal from the DC power supplied by the output cable are provided in the output connectors 160, 260. In this way a single cable is able to provide both data connectivity and electrical power.

As shown in Figure 2, according to the embodiment shown the convertor modules 100, 200 each comprise a plurality of units. The multi-switch unit 130, 230 selectively connects to one of the four input connectors 10, 12, 14, 16. It subsequently demodulates a digital signal based on the one or more satellite signal frequency bands available on the selected input connector. It is not required to demodulate the satellite signal frequency bands in their entirety, it could for example suffice to demodulate a part of the satellite signal frequency bands, for example the part comprising a transponder for the selected television channel. These demodulated digital signals in this particular embodiment could for example be provided in the form of eight lines with a suitable signal according to the MPEG transport stream (MTS or TS) standard.

These digital demodulated signals are then subsequently passed on to a conversion controller unit 140, 240 connected to the multi-switch 130, 230. This conversion controller unit 140, 240 then converts the demodulated digital signals to a digital Internet Protocol based output signal. In order to accomplish this the controller unit 140, 240, for example in the form of a suitably programmed microcontroller is preferably connected to suitable memory devices for storing and executing the programmable instructions governing its operation, such as for example a non-transitory Flash based memory device 142, 242 and a suitable amount of transitory Random Access Memory 144, 244. Finally a physical layer unit 150, 250 is connected to the conversion controller unit 140, 240 to convert the digital Internet Protocol based output signal to the Internet Protocol based signal in function of a predetermined Physical OSI layer, desirably based on the Ethernet standard, and preferably based on the Power Over Ethernet standard. Such a physical layer unit 150, 250 is often referred to as a PHY chip and the conversion controller unit 140, 240 then comprises a Ethernet Media Access Control (MAC) device. Both can for example be linked by means of a standardised interface such as a Reduced Gigabit Media Independent Interface (RGMII). The physical layer unit 150, 250 is then connected to the RX and TX lines of the output connector 160, 260.

As further shown in Figure 2 an optional auxiliary power supply connector 80 has been provided. This auxiliary power supply connector 80 is connected to both power supply modules 170, 270. When power is provided to the power supply modules 170, 270 by means of the output connectors 160, 260 then the auxiliary power supply connector 80 can be left unconnected. However, in the particular situation where one of the two output connectors 160, 260 is connected to a device that is not capable of providing power to the corresponding output connector 160, 260, for example because it does not support the Power Over Ethernet standard, then the power for the corresponding convertor module 100, 200 can be supplied by means of a power supply connected to this auxiliary power supply connector 80.

According to still a further embodiment, as an alternative solution to provide support for a device that is not capable of providing power to the corresponding output connector 160, 260, it generally suffices when there is at least one power supply module 170, 270 that is connected to at least one of the output connectors 160, 260 and can provided power to the plurality of convertor modules 100, 200. As soon as there is one device connected to an output connector 160, 260 that is able to supply power to it, all convertor modules 100, 200 can be powered by the possibly single power supply module, even when their corresponding output connector 160, 260 is connected to a device not capable of providing power.

It is further clear that according to a further alternative embodiment, the cascadable multiple dwelling satellite signal distribution device 1 further comprises suitable input and cascade output connectors for also receiving signals from other sources then satellites, such as for example terrestrial tv signals. There must then be foreseen at least one further input connector to receive an input terrestrial signal comprising one or more terrestrial signal frequency bands from an input cable. This input terrestrial signal is then relayed to a corresponding further cascade output connector that is connected to a respective further input connector and configured to output a cascade output satellite signal comprising the input terrestrial signal to a cascade output cable. The plurality of convertor modules 100, 200, must then also be adapted to further handle these terrestrial signals. Each of the convertor modules is therefore further connected to the at least one further input connector and further configured to demodulate and convert a part or all of the one or more terrestrial signal frequency bands to the Internet Protocol based output signal.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A cascadable multiple dwelling satellite signal distribution device (1), comprising:
- at least one input connector (10, 12, 14,16) configured to receive an input satellite signal comprising one or more satellite signal frequency bands from an input cable;
- at least one corresponding cascade output connector (20, 22, 24, 26) being connected to a respective input connector (10, 12, 14,16) and configured to output a cascade output satellite signal comprising the input satellite signal to a cascade output cable;
- a plurality of convertor modules (100, 200), each being connected to the at least one input connector and configured to demodulate and convert a part or all of the one or more satellite signal frequency bands to an Internet Protocol based output signal; and
- a plurality of output connectors (160, 260), each being connected to a corresponding convertor module (100, 200) for receiving the Internet Protocol based output signal and configured to output this Internet Protocol based output signal, **CHARACTERISED IN THAT**
the cascadable multiple dwelling satellite signal distribution device (1) further comprises at least one power supply module (170, 270), being connected to the respective convertor modules (100, 200) and at least one of the corresponding output connectors (160, 260),
said at least one power supply module (170, 2070) being configured to:
- receive power from at least one of the respective output connectors (160, 260); and
- provide this received power to its plurality of convertor modules (100, 200).

2. A cascadable multiple dwelling satellite signal distribution device according to claim 1, **characterised in that** the cascadable multiple dwelling satellite signal distribution device (1) comprises a plurality of power supply modules (170, 270), each being connected to one of the respective convertor modules (100, 200) and the corresponding output connector (160, 260),
said power supply modules (170, 2070) being configured to:
- receive power from its respective output connector (160, 260); and
- provide this received power to its respective convertor module (100, 200).

3. A cascadable multiple dwelling satellite signal distribution device according to claim 1 or 2, **characterised in that:**
- The at least one input connector (10, 12, 14,16) is configured to connect to an input cable that is a coaxial cable (4) suitable for transporting the one or more satellite signal frequency bands;
- The at least one corresponding cascade output connector (20, 22, 24, 26) is configured to connect to a cascade output cable that is a coaxial cable (4) suitable for transporting the one or more satellite signal frequency bands; and
- The plurality of output connectors (160, 260) are configured to connect to output cables that are Ethernet cables (9) suitable for concurrently transporting the Internet Protocol based output signal and power.

4. A cascadable multiple dwelling satellite signal distribution device according to claim 3, **characterised in that** the plurality of output connectors (160, 260) are configured to connect to output cables (9) that are Ethernet cables suitable for concurrently transporting the Internet Protocol based output signal and power in accordance with the Power Over Ethernet standard.

5. A cascadable multiple dwelling satellite signal distribution device according to any of the preceding claims, **characterised in that** the convertor module (100, 200): comprises:
- a multi-switch unit (130) configured to selectively connect to one of the at least one input connectors and output at least one demodulated digital signal based on a part or all of the one or more satellite signal frequency bands;
- a conversion controller unit (140) connected to the multi-switch (130) and configured to convert the at least one demodulated digital signal to a digital Internet Protocol based output signal
- a physical layer unit (150) connected to the conversion controller unit (140) and configured to convert the digital Internet Protocol based output signal to the Internet Protocol based signal in function of a predetermined Physical OSI layer.

6. A cascadable multiple dwelling satellite signal distribution device according to claim 5, **characterised in that** the predetermined Physical OSI layer is based on the Ethernet standard.

7. A cascadable multiple dwelling satellite signal distribution device according to claim 6, **characterised in that** the predetermined Physical OSI layer is further based on the Power Over Ethernet standard.

8. A cascadable multiple dwelling satellite signal distribution device according to any of the preceding claims, **characterised in that** the cascadable multiple dwelling satellite signal distribution device (1) further comprises:
- at least one further input connector configured to receive an input terrestrial signal comprising one or more terrestrial signal frequency bands from an input cable;
- at least one further corresponding cascade output connector being connected to a respective further input connector and configured to output a cascade output satellite signal comprising the input terrestrial signal to a cascade output cable; and
- the plurality of convertor modules (100, 200), each being further connected to the at least one further input connector and further configured to demodulate and convert a part or all of the one or more terrestrial signal frequency bands to the Internet Protocol based output signal.

9. A cascadable multiple dwelling satellite signal distribution device according to any of the preceding claims, **characterised in that** the cascadable multiple dwelling satellite signal distribution device (1) further comprises:
- a plurality of the input connectors (10, 12, 14,16); and
- a plurality of corresponding cascade output connectors (20, 22, 24, 26).

10. A multiple dwelling satellite signal distribution system (300) comprising a plurality of cascadable multiple dwelling satellite signal distribution devices (1) according to any of the preceding claims, **characterised in that** it comprises:
- a first cascadable multiple dwelling satellite signal distribution device (1);
- at least one of the output connectors (160, 260) of the first cascadable multiple dwelling satellite signal distribution device (1) being configured to receive power and provide this received power to its plurality of convertor modules (100, 200);
- a second cascadable multiple dwelling satellite signal distribution device (1) of which the at least one input connector (10, 12, 14,16) is connected to a respective cascade output connector (20, 22, 24, 26) of the first cascadable multiple dwelling satellite signal distribution device (1);
- at least one of the respective output connectors (160, 260) of the second cascadable multiple dwelling satellite signal distribution device (1) being configured to receive power and provide this received power to its plurality of convertor modules (100, 200).
